# EUROPÄISCHE PATENTANMELDUNG

(11) **EP 2 410 319 A1**
(43) Veröffentlichungstag der Anmeldung: **25.01.2012**
(21) Anmeldenummer: 10007656.1
(22) Anmeldetag: 23.07.2010
(51) Int. Cl.: G01N 25/72

(54) **Verfahren und System zur Detektion von defekten Solarmodulen**

(71) Anmelder: Solarpower GmbH, 08529 Plauen (DE)
(72) Erfinder: Stauner, Josef, 93497 Willmering (DE)
(74) Vertreter: Benninger, Johannes

(57) **Zusammenfassung**

Die vorliegende Erfindung betrifft ein Verfahren (1) zur Detektion von Defekten eines oder mehrerer Solarmodule (5, 7) in Photovoltaik-Modulreihen (3) und/oder in Solarparks und/oder auf Dachkonstruktionen, bei dem eine Wärmebildererfassungseinrichtung (11) mittels eines Luftfahrzeugs (9) in den Bereich der Photovoltaik-Modulreihen (3) und/oder in den Bereich des Solarparks geführt wird. Durch die Wärmebilderfassungseinrichtung (11) wird mindestens ein Wärmebild (4) von mehreren Solarmodulen (5, 7) der Photovoltaik-Modulreihen (3) und/oder des Solarparks erstellt. Anhand des durch die Wärmebilderfassungseinrichtung (11) erstellten Wärmebildes (4) werden Defekte lokalisiert und/oder in einzelnen Solarmodulen (7) identifiziert.

Die Erfindung betrifft weiterhin ein entsprechendes System zur Detektion von Defekten.

## Beschreibung

Die vorliegende Erfindung betrifft ein Verfahren zur Detektion von Defekten eines Solarmoduls mit den Merkmalen des Verfahrensanspruchs 1. Die Erfindung betrifft weiterhin ein System mit den Merkmalen des Anspruchs 8.

Derartige Verfahren sind bereits aus dem Stand der Technik bekannt. So offenbart beispielsweise die DE 694 14 630 T2 ein Verfahren, bei dem ein Lichtstrahl auf ein Solarmodul gerichtet wird. Darauf erfolgt eine Reflexion des Lichtstrahls durch das Solarmodul. Durch die Charakteristika der Reflexion kann auf mechanische Defekte des Solarmoduls geschlossen werden.

Ein weiteres Verfahren wird durch die DE 10 2007 007 140 B4 offenbart, bei dem an einen pn-Übergang eine Spannung zum Betrieb des pn-Übergangs in Durchlassrichtung angelegt wird. Ferner wird das durch die angelegte Spannung erzeugte Strahlungsverhalten optisch erfasst und auf Intensitätsänderungen untersucht. Anhand der Intensitätsänderungen kann auf Defekte geschlossen werden.

Bei beiden aus dem Stand der Technik bekannten Verfahren kann jeweils nur ein Solarmodul hinsichtlich möglicher Defekte untersucht werden, was zu einem enormen Zeitaufwand bei der Überprüfung einer aus mehreren Solarmodulen gebildeten Modulreihe und/oder eines gesamten Solarparks führt. In der Praxis sind häufig zwischen 10 und 30 Solarmodule in Reihe geschaltet. Weist nun eines dieser Solarmodule einen Defekt auf, so führt dies zu einem Ausfall der mit dem defekten Solarmodul in Reihe geschalteten Module. Aus diesem Grunde wäre eine rasche Identifikation einzelner defekter Solarmodule zur Effizienzsteigerung von einzelnen Modulreihen und/oder eines Solarparks wünschenswert.

Aufgabe der Erfindung ist daher, ein Verfahren zur Detektion von Defekten in Photovoltaik-Modulreihen und/oder in Solarparks zur Verfügung zu stellen, bei dem zeitoptimiert Defekte von mehreren einzelnen Solarmodulen erkannt werden können. Weiter soll das Verfahren auf einfache und unkomplizierte Weise ausgebildet sein.

Die Aufgabe der Erfindung wird durch ein Verfahren mit den Merkmalen des Anspruchs 1 sowie durch ein System mit den Merkmalen des Anspruchs 8 gelöst.

Das Verfahren ist geeignet zur Detektion von Defekten eines oder mehrerer Solarmodule in Photovoltaik-Modulreihen und/oder in Solarparks. Photovoltaik-Modulreihen können beispielsweise auch auf Dachanlagen installiert sein. Die erfindungsgemäß detektierbaren Defekte können mitunter durch Zellfehler, die beispielsweise durch mechanische Krafteinwirkung auf ein Solarmodul entstehen können, auftreten. In der Praxis hat sich gezeigt, dass mittels des beanspruchten Verfahrens ein Solarpark mit ca. 10000 Solarmodulen in weniger als einer Stunde hinsichtlich defekter Solarmodule überprüft werden kann.

Im Rahmen des Verfahrens wird eine Wärmebilderfassungseinrichtung mittels eines Luftfahrzeugs in den Bereich der Photovoltaik-Modulreihen geführt. Die Wärmebilderfassungseinrichtung kann beispielsweise mindestens einen Infrarotsensor aufweisen. Auch kann die Wärmebilderfassungseinrichtung eine Speichereinheit mit Speichermedium und/oder eine Datenverarbeitungseinheit beinhalten, um erfasste Daten zu speichern und/oder zu verarbeiten. Beispielsweise kann die Wärmebilderfassungseinrichtung als Wärmebildkamera ausgebildet sein. Der Terminus Luftfahrzeug soll im Rahmen der vorliegenden Erfindung breit ausgelegt werden. So zählen hierzu sowohl Luftfahrzeuge mit, als auch ohne Kraftantrieb. Beispielsweise Segelflugzeuge, Tragschrauber, Hubschrauber, Flugschrauber, wie auch Hängegleiter oder Motorsegler können bei diversen Ausführungsformen der vorliegenden Erfindung Verwendung finden. Dem Fachmann sind darüber hinaus zahlreiche weitere Luftfahrzeuge bekannt, die im Rahmen der Beschreibung nicht explizit aufgeführt werden.

Mittels des Luftfahrzeugs wird die Wärmebilderfassungseinrichtung in den Bereich der Photovoltaik-Modulreihen und/oder des Solarparks geführt. Der Bereich der Photovoltaik-Modulreihen ist bei der vorliegenden Erfindung durch sämtliche Bereiche definiert, welche dem Erfassungsbereich der Wärmebilderfassungseinrichtung zugänglich sind. Beispielsweise kann sich der Bereich in einer zu den Solarmodulen erhöhten Position und/oder seitlich versetzt zu den Solarmodulen befinden.

Desweiteren wird durch die Wärmebilderfassungseinrichtung mindestens ein Wärmebild von mindestens einem Teilbereich der Photovoltaik-Modulreihen und/oder des Solarparks erstellt. Vorzugsweise können mehrere Wärmebilder nacheinander erstellt werden, so dass die Wärmebilder eine Strahlungsintensitätsänderung jeglicher der zu überprüfenden Solarmodule aufzeigen. Weiter können Wärmebilder beispielsweise mittels Filmen durch die Wärmebilderfassungseinrichtung aufgezeichnet werden.

Auch werden anhand des durch die Wärmebilderfassungseinrichtung erstellten Wärmebildes Defekte lokalisiert und/oder in einzelnen Solarmodulen identifiziert. Erfahrungsgemäß zeigen Solarmodule in ihren defekten Bereichen aufgrund des dort auftretenden Widerstandes eine erhöhte Wärmebildung. Diese kann über die Wärmebilderfassungseinrichtung lokalisiert werden. Erhöhte Wärmebildung lässt auf Defekte des jeweiligen Solarmoduls schließen, so dass mittels der Wärmebilderfassungseinrichtung Solarmodule mit Defekten identifiziert werden können.

In einer Ausführungsform der vorliegenden Erfindung können Solarmodule mit Defekten durch eine sich im oder am Luftfahrzeug befindliche Kennzeichnungsvorrichtung markiert werden. Als geeignet zur Kennzeichnung haben sich beispielsweise Farbmarkierungen erwiesen. Die Wärmebilderfassungseinrichtung kann beispielsweise mit der Kennzeichnungsvorrichtung derart in Wirkzusammenhang stehen, dass bei Detektion von Solarmodulen mit Defekten eine vollautomatische Kennzeichnung der Selbigen erfolgt. Hierbei kann eine Bilderfassung durch die Wärmebilderfassungseinrichtung vorgenommen werden. Das erfasste Bild kann weiter an eine Auswerteeinheit übertragen werden, welche bei Defekten eine Kennzeichnungsvorrichtung betätigt, die eine Markierung von Solarmodulen mit Defekten vornimmt. Weiter kann beispielsweise durch die Wärmebilderfassungseinrichtung ein Bild und/oder ein Film und/oder eine Information ausgegeben werden, so dass die Kennzeichnung von defekten Solarmodulen durch eine sich im Luftfahrzeug befindliche Person, beispielsweise mittels einer Schusseinrichtung, vorgenommen werden kann.

Die vorliegende Erfindung umfasst weiterhin ein System zur Detektion von Defekten eines oder mehrerer Solarmodule in Photovoltaik-Modulreihen und/oder in Solarparks und/oder auf Dachkonstruktionen. Das erfindungsgemäße System umfasst eine Wärmebildererfassungseinrichtung, die auf einem Luftfahrzeug montiert ist und dadurch in der Lage ist, einen Bereich oberhalb der Photovoltaik-Modulreihen und/oder des Solarparks zu erfassen, eine Wärmebilderfassungseinrichtung zur Generierung mindestens eines Wärmebilds von mehreren Solarmodulen der Photovoltaik-Modulreihen und/oder des Solarparks sowie eine Auswerteeinheit zur Identifikation und/oder Lokalisierung einzelner Defekte auf Grundlage des von der Wärmebilderfassungseinrichtung erzeugten Signals. Wahlweise kann die Auswerteeinheit mit einer am Luftfahrzeug befindlichen Kennzeichnungsvorrichtung zur Markierung der als defekt erkannten Solarmodule gekoppelt sein. Als solche Kennzeichnungsvorrichtung kann bspw. eine Schusseinrichtung mit Farbmunition in Frage kommen, die es ermöglicht, aus gewisser Entfernung die defekten Areale eindeutig zu kennzeichnen, um sie später durch entsprechend instruiertes Personal in elektrischer Hinsicht überprüfen und/oder gezielt austauschen und ersetzen zu lassen. Das Personal braucht hierbei über keine direkte Kommunikationsverbindung zu der Luftfahrzeugbesatzung zu verfügen, da die farbliche Kennzeichnung eine ausreichende Information über den Status "defekt" oder "nicht defekt" liefert.

Weitere Merkmale, Ziele und Vorteile der vorliegenden Erfindung gehen aus der nun folgenden detaillierten Beschreibung einer bevorzugten Ausführungsform der Erfindung hervor, die als nicht einschränkendes Beispiel dient und auf die beigefügten Zeichnungen Bezug nimmt.
Fig. 1 zeigt eine schematische Ansicht eines Verfahrens zur Detektion von Defekten eines oder mehrerer Solarmodule in einer Photovoltaik-Modulreihe;
Fig. 2 zeigt ein Wärmebild einzelner Solarmodule einer Photovoltaik-Modulreihe, wie es durch eine Wärmebilderfassungseinrichtung erstellt werden kann;
Fig. 3 zeigt ein Flussdiagramm mit zeitlich aufeinanderfolgenden Verfahrensschritten, wie sie Gegenstand eines Ausführungsbeispiels der vorliegenden Erfindung sein können.

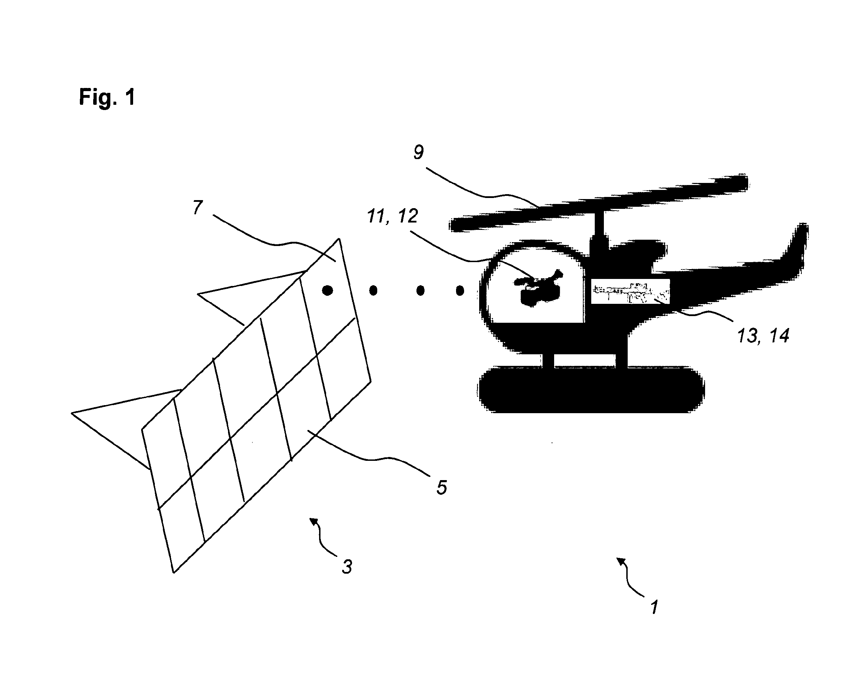

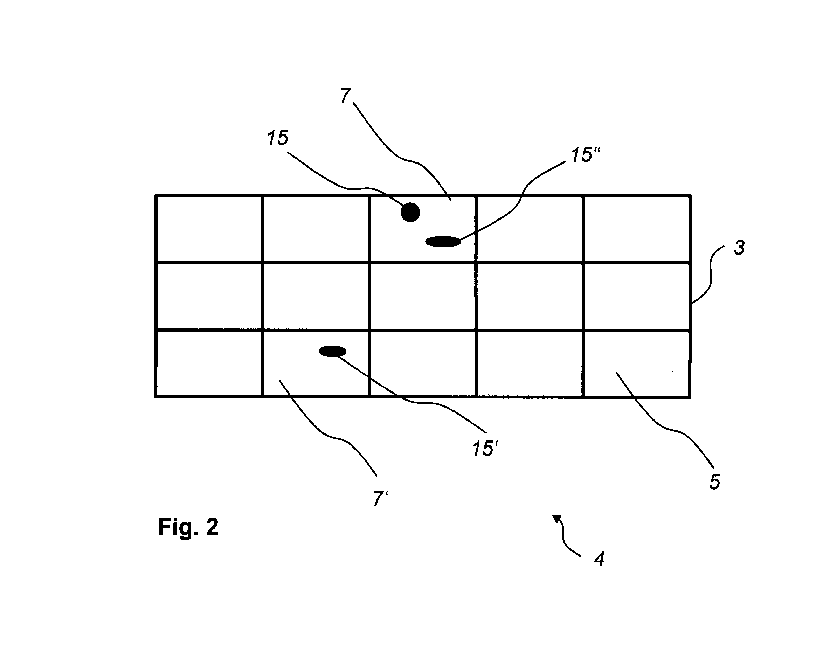

**Fig. 1** zeigt eine schematische Ansicht eines Verfahrens 1 zur Detektion von Defekten eines oder mehrerer Solarmodule 5 einer Photovoltaik-Modulreihe 3. Eine Wärmebilderfassungseinrichtung 11, im gezeigten Ausführungsbeispiel als Wärmebildkamera 12 ausgebildet, wird mittels eines Luftfahrzeugs 9 in den Bereich der Photovoltaik-Modulreihen 3 geführt. Anschließend erfasst die Wärmebildkamera 12 ein Wärmebild 4 (siehe hierzu Figur 2) von mehreren Solarmodulen 5 der Photovoltaik-Modulreihe 3. Mittels des Wärmebildes 4 können Defekte in einzelnen Solarmodulen 7 identifiziert werden. In einem nächsten Verfahrensschritt werden Solarmodule mit Defekten 7 durch eine sich am Luftfahrzeug 9 befindliche Kennzeichnungsvorrichtung 13, im gezeigten Ausführungsbeispiel als Schusseinrichtung 14 ausgebildet, markiert.

**Fig. 2** zeigt ein Wärmebild 4 einer Photovoltaik-Modulreihe 3, wie es durch eine Wärmebilderfassungseinrichtung 11 (siehe Figur 1) erstellt werden kann. Das Wärmebild 4 weist in bestimmten Bereichen eine erhöhte Wärmebildung 15, 15` und 15" auf. Bereiche mit erhöhter Wärmebildung 15, 15` und 15" können von der Wärmebilderfassungseinrichtung 11 lokalisiert werden. Weiter können Solarmodule 5 mit Bereichen mit erhöhter Wärmebildung 15, 15` und 15" als Solarmodule mit Defekten 7 identifiziert werden.

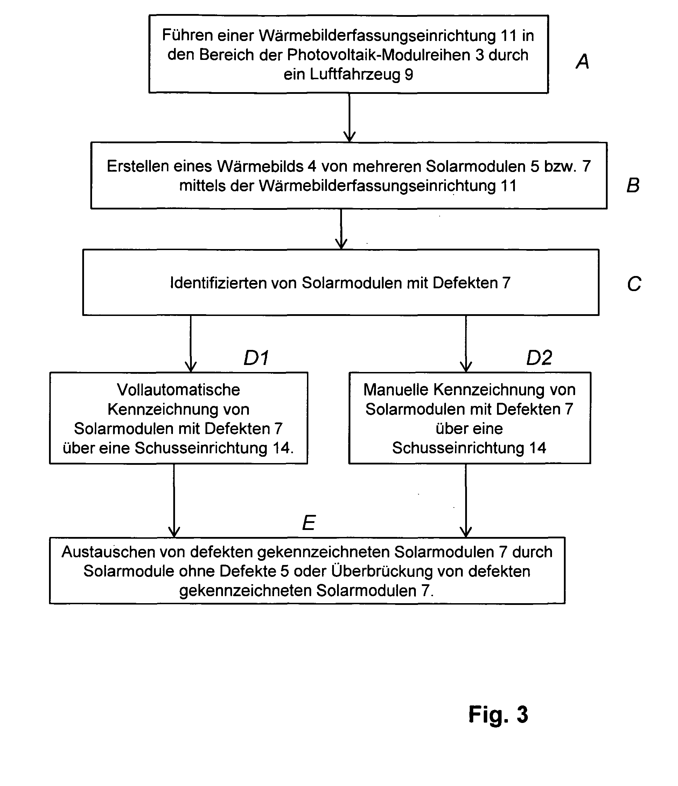

**Fig. 3** zeigt ein Flussdiagramm mit zeitlich aufeinanderfolgenden Verfahrensschritten A-E, wie sie Gegenstand eines Ausführungsbeispiels der vorliegenden Erfindung sein können. So wird in einem ersten Verfahrensschritt A, wie bereits im Hinblick auf Figur 1 dargestellt, eine Wärmebilderfassungseinrichtung 11 in den Bereich der Photovoltaik-Modulreihen 3 durch ein Luftfahrzeug 9 geführt. In einem weiteren Verfahrensschritt B erfolgt die Erstellung eines Wärmebildes 4 von mehreren Solarmodulen 5 bzw. 7 mittels der Wärmebilderfassungseinrichtung 11. Anhand des Wärmebildes 4 werden anschließend Solarmodule mit Defekten 7 identifiziert. Weiter kann im nächsten Verfahrensschritt D1 bzw. D2 die manuelle oder vollautomatische Kennzeichnung von Solarmodulen mit Defekten 7 mittels einer Schusseinrichtung 14 erfolgen. Im Hinblick auf den Verfahrensschritt D1 kann weiter eine Auswerteeinheit für das Wärmebild 4 vorgesehen sein, welche mittels der durch das Wärmebild 4 gewonnenen Informationen Signale an die Schusseinrichtung 14 zur Kennzeichnung einzelner Solarmodule mit Defekten 7 weitergibt. In einem letzten Verfahrensschritt E werden gekennzeichnete Solarmodule mit Defekten 7 ausgetauscht. Ebenso kann in einem letzten Verfahrensschritt E eine Überbrückung des defekten Solarmoduls 7 erfolgen. Beispielsweise kann in der Praxis eine Überbrückung sinnvoll sein, wenn der Austausch eines defekten Solarmoduls 7 nicht sofort erfolgen kann und sich die Photovoltaik-Modulreihe 3 trotzdem weiter in Betrieb befinden soll.

Die in der vorstehenden Beschreibung, den Zeichnungen und den Ansprüchen offenbarten Merkmale der Erfindung können sowohl einzeln als auch in beliebiger Kombination für die Verwirklichung der Erfindung in ihren verschiedenen Ausgestaltungen von Bedeutung sein. Die Erfindung ist nicht auf die vorstehenden Ausführungsbeispiele beschränkt. Vielmehr ist eine Vielzahl von Varianten und Abwandlungen denkbar, die von dem erfindungsgemäßen Gedanken Gebrauch machen und deshalb ebenfalls in den Schutzbereich fallen.

### Bezugszeichenliste:

- 1: Verfahren zur Detektion von Defekten eines oder mehrerer Solarmodule
- 3: Photovoltaik-Modulreihen
- 4: Wärmebild
- 5: Solarmodul
- 7: Solarmodul mit Defekten
- 9: Luftfahrzeug
- 11: Wärmebilderfassungseinrichtung
- 12: Wärmebildkamera
- 13: Kennzeichnungsvorrichtung
- 14: Schusseinrichtung
- 15: Bereich mit erhöhter Wärmebildung
- A-E: Verfahrensschritte

## Patentansprüche

1. Verfahren (1) zur Detektion von Defekten eines oder mehrerer Solarmodule (5, 7) in Photovoltaik-Modulreihen (3) und/oder in Solarparks und/oder auf Dachkonstruktionen, bei dem
- eine Wärmebildererfassungseinrichtung (11) mittels eines Luftfahrzeugs (9) in den Bereich der Photovoltaik-Modulreihen (3) und/oder in den Bereich des Solarparks geführt wird und wobei
- durch die Wärmebilderfassungseinrichtung (11) mindestens ein Wärmebild (4) von mehreren Solarmodulen (5, 7) der Photovoltaik-Modulreihen (3) und/oder des Solarparks erstellt wird und
- anhand des durch die Wärmebilderfassungseinrichtung (11) erstellten Wärmebildes (4) Defekte lokalisiert und/oder in einzelnen Solarmodulen (7) identifiziert werden.

2. Verfahren nach Anspruch 1, wobei Solarmodule mit Defekten (7) durch eine sich im oder am Luftfahrzeug (9) befindliche Kennzeichnungsvorrichtung (13) markiert werden.

3. Verfahren nach Anspruch 2, wobei die Kennzeichnungsvorrichtung (13) eine Schusseinrichtung (14) mit Farbmunition ist.

4. Verfahren nach einem der vorhergehenden Ansprüche, wobei die Kennzeichnungsvorrichtung (13) manuell oder vollautomatisch und in Wirkzusammenhang mit der Wärmebilderfassungseinrichtung (11) betätigt wird.

5. Verfahren nach einem der Ansprüche 1-3, wobei die
Wärmebilderfassungseinrichtung (11) eine Wärmebildkamera (12) ist.

6. Verfahren nach Anspruch 5, wobei die Wärmebildkamera (12) mindestens einen Infrarotsensor und/oder mindestens eine Speichereinheit und/oder mindestens eine Datenverarbeitungseinheit aufweist und das Wärmebild (4) durch den mindestens einen Infrarotsensor erfasst wird und/oder auf der mindestens einen Speichereinheit abgelegt und/oder durch die mindestens eine Datenverarbeitungseinheit bearbeitet wird.

7. Verwendung eines Verfahrens (1) nach einem oder mehreren der vorhergehenden Ansprüche für Solarparks mit mehreren tausend Solarmodulen (5, 7).

8. System (1) zur Detektion von Defekten eines oder mehrerer Solarmodule (5, 7) in Photovoltaik-Modulreihen (3) und/oder in Solarparks und/oder auf Dachkonstruktionen, mit
- einer Wärmebildererfassungseinrichtung (11), die mittels eines Luftfahrzeugs (9) einen Bereich oberhalb der Photovoltaik-Modulreihen (3) und/oder des Solarparks erfasst,
- einer Wärmebilderfassungseinrichtung (11) zur Generierung mindestens eines Wärmebilds (4) von mehreren Solarmodulen (5, 7) der Photovoltaik-Modulreihen (3) und/oder des Solarparks und
- einer Auswerteeinheit zur Identifikation und/oder Lokalisierung einzelner Defekte auf Grundlage des von der Wärmebilderfassungseinrichtung (11) erzeugten Signals.

9. System nach Anspruch 8, bei dem die Auswerteeinheit mit einer am Luftfahrzeug (9) befindlichen Kennzeichnungsvorrichtung (13) zur Markierung der als defekt erkannten Solarmodule (5, 7) gekoppelt ist.

10. System nach Anspruch 9, bei dem die Kennzeichnungsvorrichtung (13) eine Schusseinrichtung (14) mit Farbmunition ist.
